Europäisches Patentamt

European Patent Office

Office européen des brevets

(11) Numéro de publication: **0 303 749**
**A1**

## DEMANDE DE BREVET EUROPEEN

(21) Numéro de dépôt: **87401916.9**

(22) Date de dépôt: **20.08.87**

(51) Int. Cl.⁴: **B62B 9/00 , A45F 3/14 , A45F 5/00**

(43) Date de publication de la demande:
**22.02.89 Bulletin 89/08**

(84) Etats contractants désignés:
**AT BE CH DE ES GB GR IT LI LU NL SE**

(71) Demandeur: **Mocka, Jocelyn**
**42, Quai de Jemmapes**
**F-75010 Paris(FR)**

(72) Inventeur: **Mocka, Jocelyn**
**42, Quai de Jemmapes**
**F-75010 Paris(FR)**

(74) Mandataire: **Lemonnier, André**
**Cabinet LEMONNIER 4, Boulevard**
**Saint-Denis**
**F-75010 Paris(FR)**

(54) **Dispositif pour le transport à bras d'une charge telle qu'une poussette d'enfant.**

(57) La présente invention a pour objet un dispositif pour le transport à bras d'une charge telle qu'une poussette d'enfant.

Ce dispositif comporte un moyen d'accrochage (25-34) fixé sur une ceinture (10) ou à un baudrier (29) porté par l'utilisateur (11) et susceptible de coopérer avec un moyen complémentaire (5-27) solidaire d'un point latéral de la charge et un moyen de prise (13-28-39) solidaire du côté latéral opposé de la charge.

L'invention permet le transport d'une poussette occupée par un enfant en laissant libre au moins une main de l'utilisateur.

Fig. 3

EP 0 303 749 A1

## Dispositif pour le transport à bras d'une charge telle qu'une poussette d'enfant.

Le transport à bras de charges qui doivent rester dans une position spatiale relative stable, par exemple d'une poussette dans laquelle est assis un enfant, pose des problèmes. Il en est ainsi notamment lorsque la personne accompagnant l'enfant doit monter ou descendre des escaliers, emprunter des moyens de transport tels que le métro, l'autobus ou un escalier mécanique, etc.

Il est connu de suspendre des charges, telles que des valises ou analogues, à un baudrier mais, dans un tel cas, la charge est suspendue par son point haut, par exemple la poignée, au moyen de fixation prévu au point bas du baudrier et elle pend librement. Cet art connu ne suggère aucun moyen pour transporter une charge qui doit être maintenue latéralement à la personne dans une position définie telle que la position horizontale qui seule permet de laisser l'enfant assis dans la poussette. Le même problème peut se poser pour d'autres charges telles que des plateaux qui doivent être maintenus horizontaux pour éviter la chute des produits transportés. Sans un dispositif particulier de tels plateaux qui sont munis de deux poignées sur deux côtés opposés sont portés sur la tête en étant maintenus d'une main ou portés devant soi à deux mains.

L'invention a pour but de remédier à ces inconvénients et elle a pour objet un dispositif pour le transport à bras d'une charge caractérisé en ce qu'il comporte un moyen d'accrochage fixé sur une ceinture ou à un baudrier porté par l'utilisateur et susceptible de coopérer avec un moyen complémentaire solidaire d'un point latéral de la charge et un moyen de prise solidaire du côté latéral opposé de la charge.

Selon une autre caractéristique au moins l'un parmi les moyens d'accrochage et de prise latéraux permet d'exercer ou exerce un couple de stabilisation longitudinale de la charge autour de l'axe passant par lesdits moyens pour éviter le renversement de la charge.

Selon un mode de réalisation le moyen de prise solidaire du côté latéral opposé de la charge est constitué par une poignée fixée rigidement sur la charge.

Selon un autre mode de réalisation un moyen d'accrochage est associé à la poignée du côté latéral opposé, ce moyen d'accrochage pouvant s'engager dans un moyen d'accrochage complémentaire solidaire d'un baudrier. Ce mode de réalisation permet à l'utilisateur après prise en charge de la poussette de se libérer la main en utilisant le moyen d'accrochage du baudrier. Dans ce cas le moyen d'accrochage prévu sur la charge du côté de l'utilisateur assure de préférence la stabilité longitudinale et est constitué par deux organes d'accrochage écartés longitudinalement et solidaires d'une ceinture portée par l'utilisateur. La suspension en trois points pourrait également être assurée à partir d'un baudrier unique comportant deux ou trois lanières de suspension mais il est dans ce cas préférable de munir en outre le baudrier ou la charge d'un moyen de stabilisation pour éviter le basculement.

Selon une autre caractéristique l'un au moins des deux moyens d'accrochage complémentaire prévus du côté de l'utilisateur est réglable en longueur utile pour permettre l'adaptation à la taille et à la longueur de bras de l'utilisateur. Le moyen d'accrochage solidaire de la poussette est de préférence articulé sur la poussette et immobilisable sur le montant correspondant de la poussette pendant les périodes de non utilisation.

On décrira ci-après divers modes d'application de l'invention à une poussette dite poussette-cannes avec référence aux dessins ci-annexés dans lesquels:

La figure 1 est une vue en perspective de la poussette munie des moyens qui en sont solidaires.

la figure 2 illustre la mise en place et l'accrochage de la poussette de figure 1 à une ceinture portée par l'utilisatrice;

la figure 3 illustre la position de transport de la poussette;

la figure 4 illustre plus en détail un mode de réalisation du dispositif d'accrochage prévu sur le côté de la poussette;

la figure 5 illustre en élévation le moyen complémentaire d'accrochage destiné à être fixé sur une ceinture et

la figure 6 illustre un baudrier pour la suspension intégrale de la charge.

Dans les dessins la référence 1a désigne le montant de gauche de la poussette et la référence 1b le montant de droite, la référence 2 désigne les poignées, 3 les roues et 4 le siège en toile tendu dans le cadre.

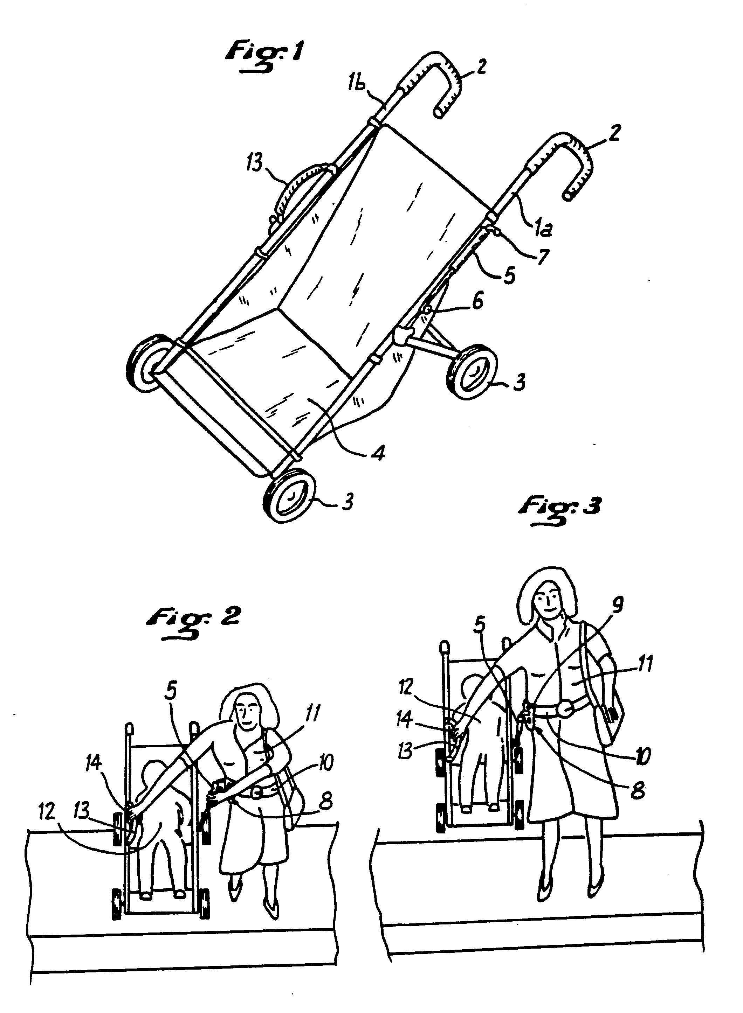

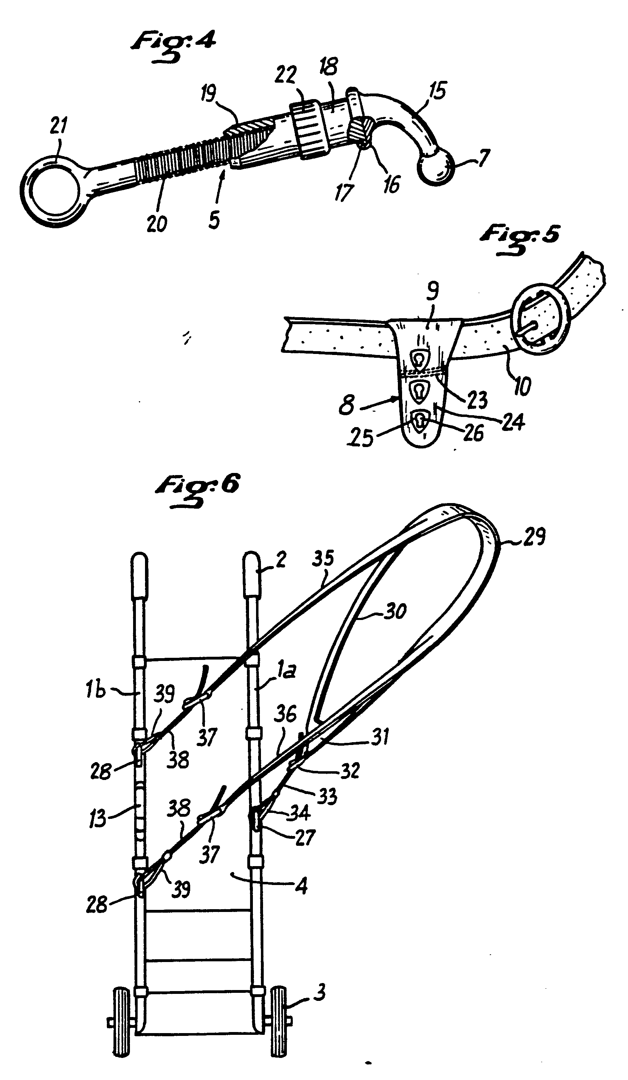

Conformément à l'invention et dans le mode de réalisation illustré aux figures 1 à 3 destiné à un utilisateur droitier, un élément d'accrochage 5 dont un mode de réalisation sera décrit plus en détail ci-après avec référence à la figure 4 est articulé en 6 sur le montant 1a. L'extrémité 7 de cet élément d'accrochage forme une tête susceptible d'être engagée dans une pièce avec ouverture en trou de serrure portée par une plaque de base 8 qui sera décrite plus en détail ci-après avec référence à la figure 5. Cette plaque de base 8 est solidaire, par exemple par un passant 9 prévu à sa partie supérieure d'une ceinture 10 entourant la taille de l'utilisatrice 11.

Le point d'articulation 6 est situé sur le montant 1a de manière à se trouver sensiblement dans le plan vertical passant par l'axe transversal d'équilibre ou axe passant par le centre de gravité de l'ensemble constitué par la poussette et l'enfant 12 porté dans celle-ci.

Sur le montant 1b de droite est fixée une poignée 13 qui se trouve sensiblement en face du point d'articulation 6. Cette poignée 13 est suffisamment rigide pour que l'on puisse exercer sur celle-ci un couple de stabilisation longitudinale pour compenser le déplacement du centre de gravité dû aux changements de position de l'enfant.

Le mode d'utilisation du dispositif est évident d'après les figures 2 et 3. En se plaçant à gauche de la poussette et en se baissant (Fig. 2) l'utilisatrice engage la tête 7 du dispositif d'accrochage dans l'ouverture sommitale la plus large du trou de serrure de la pièce portée par la plaque de base 8. et la verrouille en la faisant descendre dans la fente plus étroite que la tête 7 puis elle saisit avec la main droite 14 la poignée 13. En se relevant, elle soulève la poussette et l'enfant (Fig. 3), la main gauche restant libre pour maintenir son sac, saisir une rampe d'escalier, etc.

La figure 4 illustre plus en détail un mode de réalisation, particulièrement étudié pour résoudre divers problèmes, de l'élément d'accrochage 5. Comme représenté la tête 7 a une forme lenticulaire aplatie et est portée par un coude 15 qui se termine par une embase à gorge périphérique interne 16 sertie sur un collet 17 qui forme l'extrémité du corps 18 de l'élément. L'autre extrémité 19 du corps 18 est tubulaire et taraudée intérieurement pour le vissage, une tige filetée 20 portant à son autre extrémité l'oeilleton 21 qui coopère avec le téton 6 porté par le montant 1a pour former l'articulation. Sur le corps 18 est fixée une bague aimantée 22 qui par coopération avec le montant 1a ou une pièce en fer portée par celui-ci permet de maintenir l'élément 5 plaqué contre ledit montant pendant la non utilisation et de le dégager facilement lorsque l'on désire porter la poussette.

La figure 5 représente à titre d'illustration un mode de réalisation de l'organe complémentaire de l'élément d'accrochage 5. Cet organe complémentaire est constitué par une plaque de base 8 par exemple en cuir repliée à sa partie supérieure avec couture du bord libre en 23 pour former le passant 9 dans lequel est enfilée la ceinture 10. Sur la plaque 8 et notamment sur sa bande pendante 24 sont rivetées ou griffetées des plaquettes 25 qui forment des cuvettes bombées en saillie vers l'avant. Dans la partie bombée de chaque plaquette 25 est découpée une fenêtre 26 en trou de serrure comportant un trou circulaire supérieur permettant l'engagement de la tête 7 qui se loge dans la cuvette bombée et une fente verticale dont la largeur est comprise entre le diamètre du coude 15 et le diamètre de la tête 7. On obtient ainsi, de manière connue, le verrouillage de l'élément d'accrochage 5 sur la plaquette 25 et la plaque 8. Trois plaquettes 25 sont prévues les unes au-dessus des autres sur la plaque 8. Ceci permet, en combinaison avec le réglage de longueur de l'élément 5 par vissage du corps 18 sur la tige filetée 20, d'adapter le dispositif à la taille et à la longueur de bras de l'utilisatrice 11.

Il est bien évident que les modes de réalisation de l'élément d'accrochage 5 et de l'élément complémentaire 8 sont donnés à titre purement illustratif et non limitatif. On pourrait y substituer des dispositifs à crochet et chainette, à pontet et lanière et autres. La plaque 8 au lieu d'être en cuir pourrait être en plaquettes métalliques articulées et elle pourrait, au lieu d'être enfilée sur une ceinture d'un type quelconque connu, être fixée à l'extrémité d'une bretelle ou d'un baudrier. On pourrait également, pour stabiliser la charge longitudinalement, prévoir sur la ceinture 10 deux plaques 8 ou une seule plaque 8 plus large portant deux rangées de plaquettes 25 et, sur le montant 1a deux organes d'accrochage 5 avec les points d'articulation 6 placés de part et d'autre du plan vertical passant par l'axe de gravité.

Dans la figure 6 on a représenté un mode de réalisation de l'invention qui utilise un baudrier pour permettre de laisser libres les deux mains de l'utilisatrice.

Dans cette figure les mêmes références désignent les mêmes éléments. Sur le montant 1a est soudé sensiblement au même emplacement que l'articulation 6 du mode de réalisation précédent un pontet ou anneau 27 et sur le montant 1b, de part et d'autre de la poignée 13, des pontets ou anneaux 28.

Le baudrier 29 comporte une boucle fermée 30 dont la partie inférieure 31 porte une boucle 32 permettant le réglage en longueur d'une courroie 33 portant à son extrémité un crochet 34 destiné à venir s'accrocher sur l'anneau 27. Il comporte également une lanière arrière 35 et une lanière avant 36 se terminant par des boucles 37 permettant le réglage en longueur de courroies 38 portant à leur extrémité un crochet 39 destiné à venir s'accrocher sur les anneaux 28.

Après avoir accroché le crochet 34 et avoir soulevé la poussette à l'aide de la poignée 13 l'utilisatrice peut accrocher les crochets 39 sur les anneaux 28, ce qui libère sa main droite.

**Revendications**

1. Un dispositif pour le transport à bras d'une charge telle qu'une poussette d'enfant, caractérisé en ce qu'il comporte un moyen d'accrochage (25-34) fixé sur une ceinture (10) ou à un baudrier (29) porté par l'utilisateur (11) et susceptible de coopérer avec un moyen complémentaire (5-27) solidaire d'un point latéral de la charge et un moyen de prise (13-28-39) solidaire du côté latéral opposé de la charge.

2. Un dispositif selon la revendication 1, caractérisé en ce qu'au moins l'un (13, 28) parmi les moyens d'accrochage et de prise latéraux permet d'exercer ou exerce un couple de stabilisation longitudinale de la charge (1-12) autour de l'axe passant par lesdits moyens (5-13-27-13) pour éviter le renversement de la charge.

3. Un dispositif selon l'une quelconque des revendications 1 et 2, caractérisé en ce que le moyen de prise solidaire du côté latéral opposé (1b) de la charge est constitué par une poignée (13) fixée rigidement sur la charge.

4. Un dispositif selon la revendication 3, caractérisé en ce qu'un moyen d'accrochage (28) est associé à la poignée (13) du côté latéral opposé, ce moyen d'accrochage pouvant s'engager dans un moyen d'accrochage complémentaire (39) solidaire d'un baudrier (29).

5. Un dispositif selon la revendication 4, caractérisé en ce que le moyen d'accrochage prévu sur la charge du côté de l'utilisateur assure la stabilité longitudinale et est constitué par deux organes d'accrochage (5-25) écartés longitudinalement et solidaires d'une ceinture (10) portée par l'utilisateur (11).

6. Un dispositif selon la revendication 4, caractérisé en ce qu'il comporte une suspension en trois points (27-28) assurée à partir d'un baudrier unique (29) comportant deux ou trois lanières (30, 35, 36) de suspension.

7. Un dispositif selon l'une quelconque des revendications 1 à 6, caractérisé en ce que l'un au moins des deux moyens d'accrochage complémentaire (5, 25) prévus du côté de l'utilisateur est réglable en longueur utile pour permettre l'adaptation à la taille et à la longueur de bras de l'utilisateur.

8. Un dispositif selon l'une quelconque des revendications 1 à 7, caractérisé en ce que le moyen d'accrochage (5) solidaire de la poussette est articulé (6) sur la poussette et immobilisable (22) sur le montant correspondant (1a) de la poussette pendant les périodes de non utilisation.

Fig. 1

Fig. 3

Fig. 2

*Fig:4*

*Fig:5*

*Fig:6*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-1 198 768 (AMATHIEU) * Figure 5; page 1, colonne de droite, lignes 37-41; page 2, colonne de gauche, lignes 1-20 * | 1 | B 62 B 9/00 A 45 F 3/14 A 45 F 5/00 |
| Y | DE-A-3 223 160 (J. MARTTINEN) * Figures 1,2; page 6, lignes 4-27; pages 7-9 * | 1 | |
| A | | 5 | |
| A | WO-A-8 400 286 (NAUTA) * Figures 1-12; page 4, ligne 9 - page 7, ligne 1 * | 1 | |
| A | DE-U-8 527 505 (PLAY) * Figures 1-4; page 4, ligne 19 - page 5, ligne 26 * | 1 | |

**DOMAINES TECHNIQUES RECHERCHES (Int. Cl.4)**

B 62 B
A 45 F

Le présent rapport a été établi pour toutes les revendications

| Lieu de la recherche | Date d'achèvement de la recherche | Examinateur |
|---|---|---|
| LA HAYE | 14-04-1988 | VANNESTE M.A.R. |

EPO FORM 1503 03.82 (P0402)